# EUROPEAN PATENT SPECIFICATION

(11) **EP 2 868 504 B1**
(45) Date of publication and mention of the grant of the patent: **24.04.2019**
(21) Application number: 13190996.2
(22) Date of filing: 31.10.2013
(51) Int. Cl.: B60J 7/22

(54) **Roof closure assembly and a wind deflector arrangement**
Dachabschlussanordnung und Windabweiseranordnung
Ensemble de fermeture de toit et agencement de déflecteur de vent

(43) Date of publication of application: 06.05.2015
(73) Proprietor: Inalfa Roof Systems Group B.V., 5804 AB Venray (NL)
(72) Inventor: Ten-Jet-Foei, Suyanto Teri Wahiyu, 6538 HR Nijmegen (NL)
(74) Representative: De Vries & Metman

(56) References cited:
- DE-U1-202006 002 018
- JP-A- 2005 289 087
- US-A1- 2010 019 545
- US-B1- 8 459 729

## Description

The present invention relates to a roof closure assembly for a vehicle according to the preamble of claim 1 or 11.

Roof closure assemblies having a wind deflector arrangement are known in the prior art. In the current roof closure assemblies, known as spoiler roofs, the closure is a panel provided with a slide pad which engages the wind deflector arm to operate the wind deflector. This slide pad is positioned relatively far rearwardly. This means that during opening movement of the panel, the wind deflector stays down in its inactive position for a relative long rearward displacement of the panel. Also when the panel is closing, the wind deflector is operated very early, when the front of the panel is still at great distance from the front of the roof opening. This operation of the wind deflector in a rearward position of the panel results in a so-called 'Wind shower' (or 'wind drop') for the driver of the vehicle. This means that since the panel travels a great distance before the wind deflector moves upward to its active position, the wind deflector cannot prevent that the wind suddenly drops down very fast into the passenger compartment onto the face of the driver, which is very unpleasant. This phenomenon already occurs when the wind deflector is still down in its inactive position and the gap between the front edge of the roof opening and the front edge of the panel is 100mm.

A possible solution could be a steeper wind deflector arm which is operated by the slide pad at a shorter distance from the roof opening front edge. However, this causes high forces on the panel and on the panel drive motor when closing the panel, which in turn affects the anti-trap system. This could be solved with a stronger panel and a stronger drive motor but this is undesirable.

A roof closure assembly according to the preamble of claims 1 and 11 is known from JP 2005 289087. The wind deflector arrangement includes an arm rotatably connected to the wind deflector body and the stationary part and an auxiliary arm rotatably connected to the arm and rotatably and slidably connected to the stationary part. Both arms are relatively long so the closure engages the auxiliary arm relatively far from its closed position.

It is thus one of the objects of the invention to provide a roof closure assembly in which the above-mentioned problems are solved or at least reduced.

According to aspects of the invention, the roof closure assembly has the features of the characterizing portion of claim 1 or 11. Embodiments of the invention are defined in the dependent claims.

In one aspect of the invention, the arm is not only rotatably but also slidably connected to the stationary part, such that the arm slides forwardly with respect to the stationary part when the arm rotates upwardly, for example by means of a straight guide for a lower end of the arm.

This arrangement has the advantage that the wind deflector may be moved more quickly in vertical direction. Furthermore the movement of the wind deflector body has a smaller rearward/forward component, compared to a normal rotary movement of the arm, even when the arm is relatively short and thus rotates through a larger angle. As a result, the wind deflector can be positioned closer to the front edge of the roof opening making it more effective and enabling to enlarge the aperture in the stationary part of the roof closure assembly at the front side. The wind deflector may stay up in its active position although the closure is already near to its closed position, thereby reducing or even fully preventing a wind shower. The arm itself may be made shorter allowing it to take up a steeply inclined active position, making it more resistant to wind forces. Nonetheless the point of engagement between the closure and the arm assembly can be relatively far back.

The auxiliary arm may for example be connected to the arm in a central portion thereof.

A surface of the auxiliary arm which is engageable by the closure is curved into a curvature.

The curvature may be used to further influence the movement of the wind deflector in dependence of the displacement of the closure.

For example, the curvature of the auxiliary arm surface is such that when the closure is moved rearwardly from the closed position, the wind deflector is substantially held down in a first phase of the rearward movement and is then moved up quickly in a second phase of the rearward movement.

In an embodiment, a spring is acting on the arm such that it is biased to its upper position.

This spring enables a simple engagement of the closure and the auxiliary arm, as the closure should only effect a downward movement of the wind deflector toward its inactive position. The spring enables the upward movement to the active position controlled by the displacement of the closure.

The spring may act between the stationary part and the arm, but it may also act between the arm and the auxiliary arm.

The spring urges the arm forwardly with respect to the stationary part at the position where it is able to slide with respect to the stationary part.

The wind deflector body and the stationary part are also connected by a flexible netting or mesh extending substantially the full width of the wind deflector body.

In another aspect of the invention, the auxiliary arm is not only rotatably but also slidably connected to the arm, while the arm and the auxiliary arm are rotatably connected to the stationary part.

Further details and advantages follow from the below description with reference to the drawings showing embodiments of the roof closure assembly by way of example only.
Fig. 1 is a perspective view of a vehicle having a roof closure assembly in its fixed roof.
Figs. 2 and 3 are very schematic enlarged side views of a part of the roof closure assembly showing the wind deflector arrangement.
Figs. 4 and 5 are views corresponding to that of Fig. 3 and showing alternative embodiments of the wind deflector arrangement.

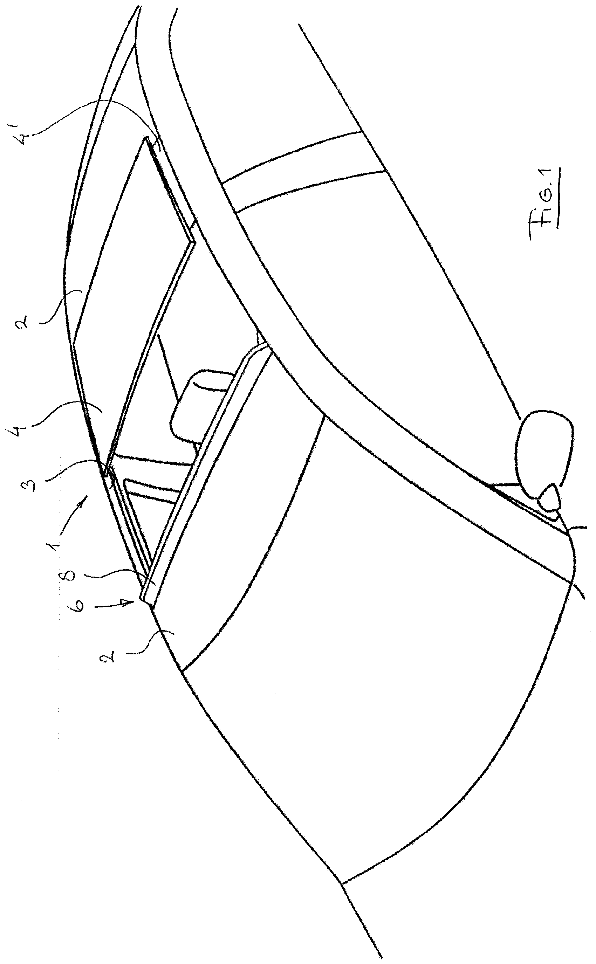

Fig. 1 illustrates a vehicle having a roof closure assembly 1 in its fixed roof 2. The fixed roof 2 of the vehicle, such as a passenger car, comprises a roof opening 3. The open roof construction comprises at least one, but here two closures 4, 4' manufactured for example from glass or plastic material, and the closures 4, 4' may be a rigid panel which is at least partly transparent. At least the front closure 4 can be moved for selectively closing and at least partially opening said roof opening 3 by a movement of an operating mechanism along a stationary part 5, such as guide rails on a frame, in a manner known in the art. In the embodiment shown, the front closure 4 is a so called spoiler roof panel which is movable from its closed position within the roof opening 3 rearwardly and upwardly, but closure 4 may also slide downwardly and rearwardly, or comprises a foldable roof cover or a number of slats or the like.

Within the circumference, but below the level of the roof opening 3, a wind deflector arrangement 6 is arranged, preferably just behind the front edge of the roof opening 3. The wind deflector arrangement 6 comprises at least one, and preferably two wind deflector arms 7, which are each pivotally connected with a first end to the stationary part 5, and which carries at a second end a wind deflector body 8 extending between the wind deflector arms 7 in a transverse direction with respect of the vehicle longitudinal axis. Said wind deflector arrangement 6 is movable between a first upper active position in which it is operative and in which the wind deflector body 8 is positioned above the surface of the fixed roof 2, and a second, inactive position in which the wind deflector body 8 is positioned in a storage position, in a so called storage space, below the surface of the fixed roof 2, i.e. below the roof opening 3. The closure 4 is capable of moving the wind deflector arrangement 6 to at least the second position.

As is shown in the drawings, wind deflector arm 7 is fixedly attached at its upper or forward end to, and might be integral with, wind deflector body 8, while the rear, lower end of arm 7 is rotatably and slidably connected to stationary part 5. In the embodiment shown, arm 7 is provided with a pin 9 slidably engaging a slot 10, which in this case is closed and straight and extends in longitudinal direction of the vehicle, so that the lower end of arm 7 can move rearwardly and forwardly. A spring 11 biases the lower end of arm 7 in forward direction, which in this case leads to a biasing force on the wind deflector body 8 in a direction towards the active position.

The drawings further show that wind deflector arrangement 6 comprises at each arm 7 an auxiliary arm 12 together forming an arm assembly 7, 12. This auxiliary arm 12 is rotatably connected at its front end to arm 7 (here by pivot 13) and at its rear end rotatably connected to the stationary part 5, by pivot 14. The point of connection by pivot 13 between auxiliary arm 12 and arm 7 is positioned between the ends of arm 7 and may vary with the design of the wind deflector arrangement 6. In the embodiment shown, the connection is substantially in the middle between both ends of arm 7. Due to the presence of auxiliary arm 12, the movement of arm 7 is fully determined by pivots 13, 14, auxiliary arm 12 and slot 10. The forward biasing force of spring 11 onto pin 9 at the lower end of arm 7 can only lead to an upward movement of arm 7, so that arm 7 is urged to its upper active position despite the fact that spring 11 is attached to pin 9 at the lower end of arm 7.

The auxiliary arm 12 is longer than the arm 7 and is directly attached to the stationary part 5 at a position behind the connection of arm 7 to stationary part 5 (at slot 10). Thus auxiliary arm 12 is more or less positioned behind arm 7.

The panel or front closure 4 is provided on its lower side with a slide pad 19 with which closure 4 can engage wind deflector arrangement 6 to move it toward its inactive position, and in this case it is adapted to engage an upper surface 15 of auxiliary arm 12. This upper surface 15 is shaped so as to form a curvature determining in part the movement of wind deflector arrangement 6 in dependence of the displacement of closure 4. In the embodiment shown, upper surface 15 includes a front curvature portion 16 adjacent pivot 13 connected to arm 7 and a rear curvature portion 17 more towards pivot 14.

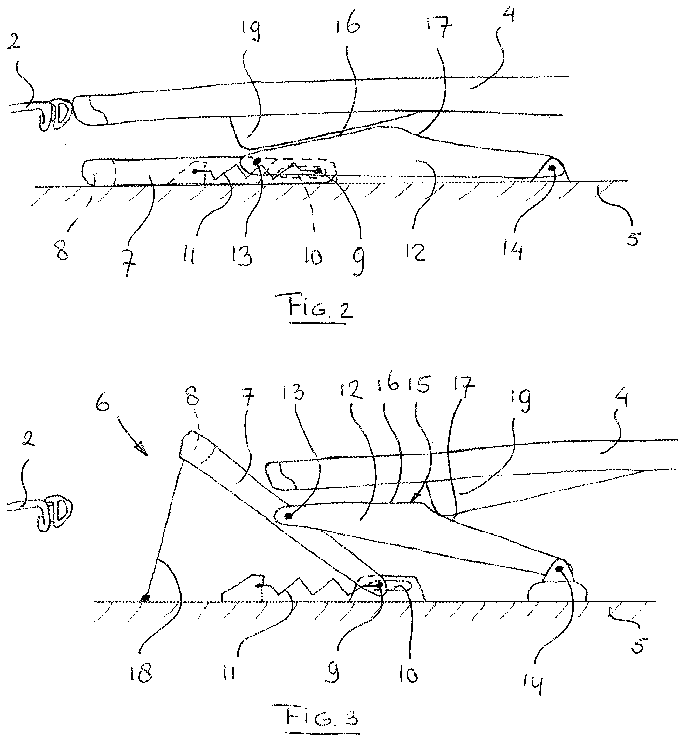

When closure 4 is displaced forwardly from its open position towards the closed position, slide pad 19 comes in contact with rear curvature portion 17 when the front edge of closure 4 is already close to the front edge of roof opening 3, see Fig. 3. In the embodiment shown, the gap between the front edge of closure 4 and the front edge of roof opening 3 might be around 43 mm when the wind deflector arrangement starts moving towards its inactive position, while in prior art assemblies, this is around 100 mm, so a substantial difference.

When closure 4 is displaced further forwardly, slide pad 19 pushes against auxiliary arm 12 and because the curvature of rear curvature portion 17 is relatively steep at this first point of engagement, auxiliary arm 12 is pushed quickly down, and due to the leverage towards arm 7 this is pivoted even more quickly downwardly. If slide pad 19 has arrived at the transition between curvature portions 17 and 16, arm 7 is almost completely down so that in the last part of the closing movement, closure 4 is not hindered by wind deflector body 8 up to its closed position as is shown in Fig. 2.

When closure 4 is opened again, the movement of wind deflector arrangement 6 is reversed, the movement being effected by spring 11 which keeps auxiliary arm 12 in engagement with slide pad 19 of closure 4 until wind deflector arrangement has reached its upper position, which in this case is determined by a flexible mesh or netting 18 which is attached to wind deflector body 8 and to stationary part 5, and is taut when wind deflector arrangement reaches its upper active position. Of course, wind deflector arrangement could also be provided with some kind of stop determining maximum rotation of at least one of the arms 7, 12 and therewith the active position of wind deflector body 8. The mesh or netting 18 extends the full width of wind deflector body 8 and may also extend around the corners so that it is also attached to arms 7.

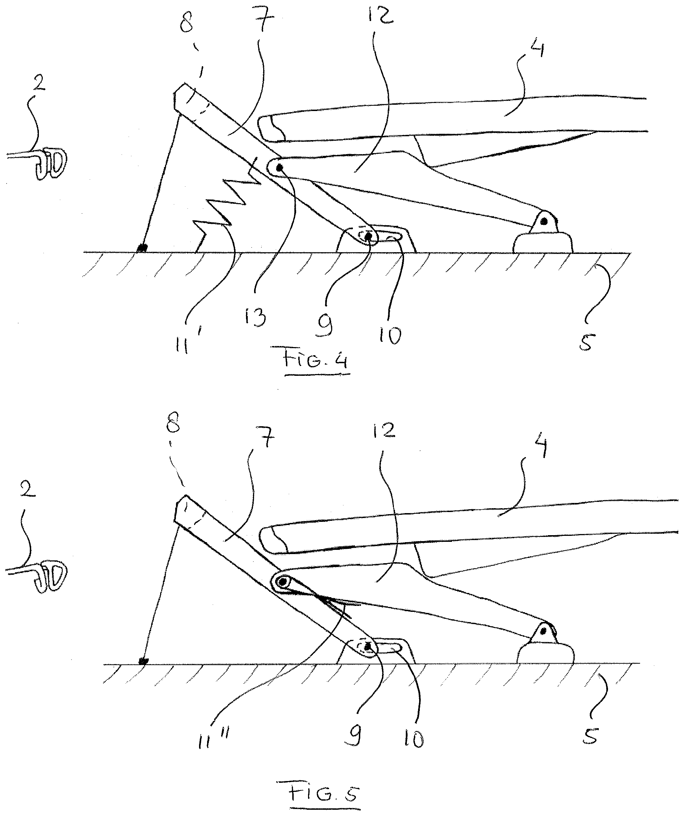

Figs. 4 and 5 show two alternative embodiments of wind deflector arrangement 6, in these cases having different springs 11' and 11". In Fig. 4, spring 11' is a pressure spring engaging arm 7 at a position between pivot 13 and wind deflector body 8, such that arm 7 is biased upwardly and rearwardly. Due to pivot 13, the lower end of arm 7 is biased slightly in forward direction, but anyhow the cooperation of arm 7 and auxiliary arm 12 also determines the position of pin 9 in slot 10 in each rotational position of arm 7.

In the embodiment of Fig. 5, spring 11" is a torsion spring connected to pivot 13 and biasing arm 7 and auxiliary arm 12 towards the maximum angle between arm 7 and auxiliary arm 14, which is in the upper active position of wind deflector body 8, see Figs 2 and 3 for a comparison of the angles between arm 7 and auxiliary arm 12.

From the foregoing it will be clear that the invention provides a roof closure and wind deflector arrangement which decreases wind-shower because wind deflector body 8 stays up longer when closure 4 is opened, increases stability of wind deflector arrangement 6 because of arm 7 being shorter and having a steeper angle in its active position, provides a simple slotted spring mechanism to realize the movement of wind deflector arrangement 6 and maintains original closure movement and activation of wind deflector arrangement by slide pad 19, and improves ATS system because of small run in angle activation.

The invention is not limited to the embodiments shown in the drawings and described above, and can be varied in different manners within the scope of the appended claims. Although the wind deflector arrangement has been described as having an arm assembly at each end, it would be conceivable to have only one arm assembly as described, for example in the middle and two other stabilizing arrangement at the ends of the wind deflector body. Furthermore it would also be possible to connect the arm to the stationary part through a rotating connection and to connect the auxiliary arm and the arm through a sliding and rotating connection. Thus, if there are two arms, there should be two rotating and one sliding and rotating connection. The slide pad of the closure cannot only engage the auxiliary arm, but may also engage the arm in a forward position of the closure. Alternatively, the closure may engage the arm only. Additional members could be added. The wind deflector arrangement may have its own stationary part which is attached to the stationary part of the roof closure assembly.

## Claims

1. Roof closure assembly (1) for a vehicle having a roof opening (3) in its fixed roof (2), comprising a stationary part (5) to be attached to the fixed roof, a closure (4) adapted to close the roof opening and to move at least to an open position rearward of the closed position, and a wind deflector arrangement (6), including a transverse elongated wind deflector body (8) adapted to be arranged near the front side of a roof opening in a vehicle roof, said wind deflector body being movable between an upper active position in which it protrudes above the vehicle roof and a lower inactive position in which it is retracted below the fixed roof, said elongated wind deflector body having two ends which are connected to arm assemblies (7, 12) which are movably coupled to the stationary part and adapted to be engaged by the closure in order to move the wind deflector body when the closure moves near the closed position, the arm assemblies each comprise an arm (7) connected between the wind deflector body and the stationary part and an auxiliary arm (12) directly and rotatably connected to the arm in a position spaced from the stationary part and wind deflector body and connected to the stationary part, the arm and/or the auxiliary arm being adapted to be engaged by the closure, **characterized in that** the arm (7) is not only rotatably but also slidably connected to the stationary part (5), such that the arm slides forwardly with respect to the stationary part when the arm rotates upwardly.

2. Roof closure assembly according to claim 1, wherein the stationary part (5) is provided with a straight guide (10) for a lower end of the arm (7).

3. Roof closure assembly according to claim 1 or 2, wherein the auxiliary arm (12) is connected to the arm (7) in a central portion thereof.

4. Roof closure assembly according to any of the preceding claims, wherein a surface (15) of the auxiliary arm (12) which is engageable by the closure (4) is curved into a curvature (16, 17).

5. Roof closure assembly according to claim 4, wherein the curvature (16, 17) of the auxiliary arm surface (15) is such that when the closure (4) is moved rearwardly from the closed position, the wind deflector is substantially held down in a first phase of the rearward movement and is then moved up quickly in a second phase of the rearward movement.

6. Roof closure assembly according to any of the preceding claims, comprising a spring (11; 11'; 11") acting on the arm (7) such that it is biased to its upper position.

7. Roof closure assembly according to claim 6, wherein the spring (11; 11') acts between the stationary part (5) and the arm (7).

8. Roof closure assembly according to claim 6, wherein the spring (11") acts between the arm (7) and the auxiliary arm (12).

9. Roof closure assembly according to claim 1 and 6, wherein the spring (11) urges the arm (7) forwardly with respect to the stationary part (5) at the position where it is able to slide with respect to the stationary part.

10. Roof closure assembly according to any of the preceding claims, wherein the wind deflector body (8) and the stationary part (5) are also connected by a flexible netting or mesh (18) extending substantially the full width of the wind deflector body.

11. Roof closure assembly (1) for a vehicle having a roof opening (3) in its fixed roof (2), comprising a stationary part (5) to be attached to the fixed roof, a closure (4) adapted to close the roof opening and to move at least to an open position rearward of the closed position, and a wind deflector arrangement (6), including a transverse elongated wind deflector body (8) adapted to be arranged near the front side of a roof opening in a vehicle roof, said wind deflector body being movable between an upper active position in which it protrudes above.the vehicle roof and a lower inactive position in which it is retracted below the fixed roof, said elongated wind deflector body having two ends which are connected to arm assemblies (7, 12) which are movably coupled to the stationary part and adapted to be engaged by the closure in order to move the wind deflector body when the closure moves near the closed position, the arm assemblies each comprise an arm (7) connected between the wind deflector body and the stationary part and an auxiliary arm (12) directly and at least rotatably connected to the arm in a position spaced from the stationary part and wind deflector body and connected to the stationary part, the auxiliary arm being adapted to be engaged by the closure, **characterized in that** the auxiliary arm (12) is not only rotatably but also slidably connected to the arm (7), while the arm and the auxiliary arm are rotatably connected to the stationary part (5).

## Patentansprüche

1. Dachverschlussvorrichtung (1) für ein Fahrzeug mit einer Dachöffnung (3) in seinem Festdach (2), aufweisend einen stationären Teil (5), der an dem Festdach anzubringen ist, ein Schließteil (4), das angepasst ist, um die Dachöffnung zu verschließen und um sich wenigstens zu einer Offenposition rückwärtig der Schließposition zu bewegen, und eine Winddeflektoreinrichtung (6), die aufweist einen querverlaufenden, langgestreckten Winddeflektorkörper (8), der angepasst ist, um nahe der Vorderseite einer Dachöffnung in einem Fahrzeugdach angeordnet zu sein, wobei der Winddeflektorkörper bewegbar ist zwischen einer oberen Aktivposition, in welcher er über das Fahrzeugdach vorsteht, und einer unteren Inaktivposition, in welcher er unter das Festdach eingefahren ist, wobei der langgestreckte Winddeflektorkörper zwei Enden hat, die mit Armeinrichtungen (7, 12) verbunden sind, welche mit dem stationären Teil bewegbar gekuppelt sind und angepasst sind, um mit dem Verschlussteil im Eingriff zu sein, um den Winddeflektorkörper zu bewegen, wenn das Verschlussteil sich nahe der Schließposition bewegt, wobei die Armeinrichtungen jeweils aufweisen einen Arm (7), der zwischen den Winddeflektorkörper und den stationären Teil gekuppelt ist, und einen Hilfsarm (12), der direkt und drehbar mit dem Arm gekuppelt ist in einer Position im Abstand von dem stationären Teil und dem Winddeflektorkörper und der mit dem stationären Teil gekuppelt ist, wobei der Arm und/oder der Hilfsarm angepasst sind/ist, um mit dem Schießteil im Eingriff zu sein, **dadurch gekennzeichnet, dass** der Arm (7) nicht nur drehbar, sondern auch verschiebbar mit dem stationären Teil (5) gekuppelt ist, derart, dass der Arm sich nach vorne verschiebt bezüglich des stationären Teils, wenn der Arm sich nach oben dreht.

2. Dachverschlussvorrichtung gemäß Anspruch 1, wobei der stationäre teil (5) mit einer Geradführung (10) für ein unteres Ende des Arms (7) bereitgestellt ist.

3. Dachverschlussvorrichtung gemäß Anspruch 1 oder 2, wobei der Hilfsarm (12) mit dem Arm (7) gekuppelt ist in einem zentralen Abschnitt von diesem.

4. Dachverschlussvorrichtung gemäß irgendeinem der vorhergehenden Ansprüche, wobei eine Fläche (15) des Hilfsarms (12), welche mit dem Schließteil (4) in Eingriff bringbar ist, zu einer Krümmung (16, 17) gekrümmt ist.

5. Dachverschlussvorrichtung gemäß Anspruch 4, wobei die Krümmung (16, 17) der Hilfsarm-Fläche (15) derart ist, dass, wenn sich das Schließteil (4) von der Schließposition aus nach hinten bewegt, der Winddeflektor im Wesentlichen unten gehalten wird in einer ersten Phase der Rückwärts-Bewegung, und dann schnell nach oben bewegt wird in einer zweiten Phase der Rückwärts-Bewegung.

6. Dachverschlussvorrichtung gemäß irgendeinem der vorhergehenden Ansprüche, aufweisend eine Feder (11; 11'; 11"), die auf den Arm (7) wirkt, derart, dass dieser zu seiner oberen Position hin vorgespannt ist.

7. Dachverschlussvorrichtung gemäß Anspruch 6, wobei die Feder (11; 11') zwischen dem stationären Teil (5) und dem Arm (7) wirkt.

8. Dachverschlussvorrichtung gemäß Anspruch 6, wobei die Feder (11") zwischen dem Arm (7) und dem Hilfsarm (12) wirkt.

9. Dachverschlussvorrichtung gemäß Anspruch 1 und 6, wobei die Feder (11) den Arm (7) nach vorne zwingt bezüglich des stationären Teils (5) an der Position, wo er imstande ist, sich bezüglich des stationären Teils zu verschieben.

10. Dachverschlussvorrichtung gemäß irgendeinem der vorhergehenden Ansprüche, wobei der Winddeflektorkörper (8) und der stationäre Teil (5) auch durch ein flexibles Geflecht oder Netz (18) gekuppelt sind, das sich im Wesentlichen über die volle Breite des Winddeflektorkörpers erstreckt.

11. Dachverschlussvorrichtung (1) für ein Fahrzeug mit einer Dachöffnung (3) in dessen Festdach (2), aufweisend einen stationären Teil (5), der an dem Festdach anzubringen ist, ein Schließteil (4), das angepasst ist, um die Dachöffnung zu verschließen und um sich wenigstens zu einer Offenposition rückwärtig der Schließposition zu bewegen, und eine Winddeflektoreinrichtung (6), die aufweist einen querverlaufenden, langgestreckten Winddeflektorkörper (8), der angepasst ist, um nahe der Vorderseite einer Dachöffnung in einem Fahrzeugdach angeordnet zu sein, wobei der Winddeflektorkörper bewegbar ist zwischen einer oberen Aktivposition, in welcher er über das Fahrzeugdach vorsteht, und einer unteren Inaktivposition, in welcher er unter das Festdach eingefahren ist, wobei der langgestreckte Winddeflektorkörper zwei Enden hat, die mit Armeinrichtungen (7, 12) gekuppelt sind, welche bewegbar mit dem stationären Teil gekuppelt sind und angepasst sind, um mit dem Schließteil in Eingriff zu sein, um den Winddeflektorkörper zu bewegen, wenn sich das Schließteil nahe der Schließposition bewegt, wobei die Armeinrichtungen jeweils aufweisen einen Arm (7), der zwischen den Winddeflektorkörper und den stationären Teil gekuppelt ist, und einen Hilfsarm (12), der direkt und wenigstens drehbar mit dem Arm gekuppelt ist in einer Position im Abstand von dem stationären Teil und dem Winddeflektorkörper und der mit dem stationären Teil gekuppelt ist, wobei der Hilfsarm angepasst ist, um mit dem Schließteil im Eingriff zu sein, **dadurch gekennzeichnet, dass** der Hilfsarm (12) nicht nur drehbar, sondern auch verschiebbar mit dem Arm (7) gekuppelt ist, wobei der Arm und der Hilfsarm mit dem stationären Teil (5) drehbar gekuppelt sind.

## Revendications

1. Ensemble de fermeture de toit (1) pour un véhicule ayant une ouverture de toit (3) dans son toit fixe (2), comprenant une partie immobile (5) à attacher au toit fixe, une fermeture (4) adaptée pour fermer l'ouverture de toit et se déplacer au moins vers une position ouverte vers l'arrière de la position fermée, et un agencement de déflecteur d'air (6), comportant un corps de déflecteur d'air allongé transversal (8) adapté pour être agencé près du côté avant d'une ouverture de toit dans un toit de véhicule, ledit corps de déflecteur d'air étant mobile entre une position active supérieure dans laquelle il dépasse au-dessus du toit de véhicule et une position inactive inférieure dans laquelle il est rétracté en dessous du toit fixe, ledit corps de déflecteur d'air allongé ayant deux extrémités qui sont raccordées à des ensembles de bras (7, 12) qui sont accouplés mobiles à la partie immobile et adaptés pour être enclenchés par la fermeture afin de déplacer le corps de déflecteur d'air lorsque la fermeture se déplace près de la position fermée, les ensembles de bras comprennent chacun un bras (7) raccordé entre le corps de déflecteur d'air et la partie immobile et un bras auxiliaire (12) raccordé directement et en rotation au bras dans une position espacée de la partie immobile et du corps de déflecteur d'air et raccordé à la partie immobile, le bras et/ou le bras auxiliaire étant adaptés pour être enclenchés par la fermeture, **caractérisé en ce que** le bras (7) n'est pas seulement raccordé en rotation mais également en coulissement à la partie immobile (5), de sorte que le bras coulisse vers l'avant par rapport à la partie immobile lorsque le bras tourne vers le haut.

2. Ensemble de fermeture de toit selon la revendication 1, dans lequel la partie immobile (5) est pourvue d'un guide droit (10) pour une extrémité inférieure du bras (7).

3. Ensemble de fermeture de toit selon la revendication 1 ou 2, dans lequel le bras auxiliaire (12) est raccordé au bras (7) dans une portion centrale de celui-ci.

4. Ensemble de fermeture de toit selon l'une quelconque des revendications précédentes, dans lequel une surface (15) du bras auxiliaire (12) qui peut être enclenché par la fermeture (4) est incurvée selon une courbure (16, 17).

5. Ensemble de fermeture de toit selon la revendication 4, dans lequel la courbure (16, 17) de la surface de bras auxiliaire (15) est telle que lorsque la fermeture (4) est déplacée vers l'arrière depuis la position fermée, le déflecteur d'air est sensiblement plaqué dans une première phase du déplacement vers l'arrière puis et monté rapidement dans une seconde phase du déplacement vers l'arrière.

6. Ensemble de fermeture de toit selon l'une quelconque des revendications précédentes, comprenant un ressort (11 ; 11'; 11") agissant sur le bras (7) de sorte qu'il soit sollicité vers sa position supérieure.

7. Ensemble de fermeture de toit selon la revendication 6, dans lequel le ressort (11 ; 11') agit entre la partie immobile (5) et le bras (7).

8. Ensemble de fermeture de toit selon la revendication 6, dans lequel le ressort (11") agit entre le bras (7) et le bras auxiliaire (12).

9. Ensemble de fermeture de toit selon les revendications 1 et 6, dans lequel le ressort (11) pousse le bras (7) vers l'avant par rapport à la partie immobile (5) à la position où il est capable de coulisser par rapport à la partie immobile.

10. Ensemble de fermeture de toit selon l'une quelconque des revendications précédentes, dans lequel le corps de déflecteur d'air (8) et la partie immobile (5) sont également raccordés par un filet ou treillis flexible (18) s'étendant sensiblement sur toute la largeur du corps de déflecteur d'air.

11. Ensemble de fermeture de toit (1) pour un véhicule ayant une ouverture de toit (3) dans son toit fixe (2), comprenant une partie immobile (5) à attacher au toit fixe, une fermeture (4) adaptée pour fermer l'ouverture de toit et se déplacer au moins vers une position ouverte vers l'arrière de la position fermée, et un agencement de déflecteur d'air (6), comportant un corps de déflecteur d'air allongé transversal (8) adapté pour être agencé près du côté avant d'une ouverture de toit dans un toit de véhicule, ledit corps de déflecteur d'air étant mobile entre une position active supérieure dans laquelle il dépasse au-dessus du toit de véhicule et une position inactive inférieure dans laquelle il est rétracté en dessous du toit fixe, ledit corps de déflecteur d'air allongé ayant deux extrémités qui sont raccordées à des ensembles de bras (7, 12) qui sont accouplés mobiles à la partie immobile et adaptés pour être enclenchés par la fermeture afin de déplacer le corps de déflecteur d'air lorsque la fermeture se déplace près de la position fermée, les ensembles de bras comprennent chacun un bras (7) raccordé entre le corps de déflecteur d'air et la partie immobile et un bras auxiliaire (12) raccordé directement et au moins en rotation au bras dans une position espacée de la partie immobile et du corps de déflecteur d'air et raccordé à la partie immobile, le bras auxiliaire étant adapté pour être enclenché par la fermeture, **caractérisé en ce que** le bras auxiliaire (12) n'est pas seulement raccordé en rotation mais également en coulissement au bras (7), tandis que le bras et le bras auxiliaire sont raccordés en rotation à la partie immobile (5).
